# EUROPÄISCHE PATENTSCHRIFT

(11) **EP 2 183 494 B1**
(45) Veröffentlichungstag und Bekanntmachung des Hinweises auf die Patenterteilung: **13.01.2016**
(21) Anmeldenummer: 08787428.5
(22) Anmeldetag: 22.08.2008
(51) Int. Cl.: F16C 33/38, F16C 29/04, E05D 15/06, F16C 29/12, F16C 41/00

(54) **LINEARFÜHRUNGSSYSTEM MIT HOHLPROFILSCHIENE**
LINEAR GUIDANCE SYSTEM COMPRISING A HOLLOW-PROFILE RAIL
SYSTEME DE GUIDAGE LINEAIRE COMPORTANT UN RAIL A PROFILE CREUX

(30) Priorität: 25.08.2007 DE 102007040230
(43) Veröffentlichungstag der Anmeldung: 12.05.2010
(73) Patentinhaber: Accuride International GmbH, 65582 Diez/Lahn (DE)
(72) Erfinder: TRAISER, Reinhold, 65520 Bad Camberg (DE)
(74) Vertreter: WSL Patentanwälte Partnerschaft mbB
(86) Internationale Anmeldenummer: PCT/EP2008/061029
(87) Internationale Veröffentlichungsnummer: WO 2009/027344

(56) Entgegenhaltungen:
- GB-A- 738 486
- JP-A- H07 279 956
- US-A- 2 812 222
- US-A- 3 145 065
- US-A- 4 629 260
- US-A- 4 655 613

## Beschreibung

Die vorliegende Erfindung betrifft ein Linearführungssystem mit einer Führungsschiene und einem daran über wenigstens zwei Kugellager verfahrbar geführten Schlitten, wobei die Kugellager jeweils mehrere Kugeln und einen Kugelkäfig umfassen und die Führungsschiene Laufflächen und der Schlitten Laufflächen für das Abwälzen der Kugeln der Kugellager aufweisen.

Linearführungssysteme lassen sich in den verschiedensten Bereichen einsetzen. Im Automobilbau werden Linearführungssysteme mit hoher Belastbarkeit u.a. für Fahrzeugschiebetüren, Ladeböden, längsverstellbare Konsolen im Fahrzeuginnenraum und andere Einrichtungen verwendet.

Im Bereich der Fahrzeugschiebetüren werden aus Stabilitätsgründen häufig Führungsschienen an der Außenseite der Karosserie montiert, an denen die Schiebetüren geführt werden. Eine solche Montage an der Außenseite der Karosserie gewährleistet zwar eine hohe Stabilität des Führungssystems unter der Belastung des Gewichts der Schiebetür, jedoch sind die auf der Außenseite der Karosserie montierten Führungsschienen bei geschlossener Schiebetür sichtbar und stören die Optik erheblich. Darüber hinaus sind diese Führungsschienen aufgrund ihrer Montage auf der Außenseite des Fahrzeugs ständig den äußeren Witterungsbedingungen ausgesetzt und korrodieren daher schneller als innen montierte Führungssysteme oder erfordern einen erheblich höheren Korrosionsschutz. Zudem sind solche Führungsschienen profiliert, so daß sich Schmutz aus der Umgebung an und in den Schienen schnell ansammelt und die Laufeigenschaften des Führungssystems dadurch sehr schnell verschlechtert werden.

Eine Schiebetür für Kraftfahrzeuge mit einer auf der Innenseite der Tür montierten Führungsschiene, bei der einige der vorgenannten Nachteile von auf der Außenseite der Karosserie montierten Führungsschienen überwunden werden, offenbart die DE 4314115 A1. Das beschriebene Führungssystem für eine Kraftfahrzeugschiebetür besitzt jedoch keine besonders guten Laufeigenschaften und damit keine gute Haptik und ist verhältnismäßig laut.

Die US-A- 4 629 260 beschreibt ein Linearführungssystem mit zwei im Wesentlichen U-förmigen, gegeneinander über zwei Kugellager verfahrbar geführten Schienenelementen. An den Endabschnitten der U-förmigen Profile sind Laufflächen angeordnet, an denen die zwischen den Profilen vorgesehenen Kugeln abgewälzt werden. Für die Befestigung von Objekten an den jeweiligen Schienenelementen sind Befestigungseinrichtungen vorgesehen, die mit den flachen Bodenabschnitten der beiden U-förmigen Profile verbunden sind.

Die JP H07 279956 beschreibt eine Linearführung aus einem ersten zylindrischen Körper und einem in dem ersten zylindrischen Körper angeordneten zweiten zylindrischen Körper, wobei die zylindrischen Körper im Wesentlichen rechteckige Querschnitte aufweisen und über zwei Kugellager in axialer Richtung gegeneinander verfahrbar gelagert sind.

Die Aufgabe der vorliegenden Erfindung bestand darin, ein Linearführungssystem bereitzustellen, das hohe Lasten tragen kann, eine geringe Geräuschentwicklung aufweist, eine kompakte Bauweise besitzt, große Verfahrwege zuläßt und verhältnismäßig preiswert herzustellen ist. Eine weitere Aufgabe der Erfindung bestand darin, ein Linearführungssystem für Fahrzeugschiebetüren, Ladeböden, längsverstellbare Konsolen im Fahrzeuginnenraum etc. mit den vorgenannten Eigenschaften zu schaffen.

Gelöst wird diese Aufgabe erfindungsgemäß durch ein Linearführungssystem der eingangs genannten Art, welches dadurch gekennzeichnet ist, daß der Schlitten ein im Querschnitt im wesentlichen C-förmiges Profil umfaßt, wobei an den jeweiligen Endabschnitten des C-förmigen Profils die Laufflächen ausgebildet sind, und der Schlitten weiterhin eine Platte umfaßt, die sich unter Ausbildung eines geschlossenen Hohlprofils zwischen den Endabschnitten des C-förmigen Profils des Schlittens erstreckt und mit diesen Endabschnitten unlösbar oder lösbar verbunden ist, wobei der Kugelkäfig elastisch verformbar ausgebildet und an der Führungsschiene befestigt ist.

Der Begriff Kugelkäfig im Sinne der vorliegenden Erfindung umfasst alle Arten von bekannten Kugelkäfigen, insbesondere streifenförmige Kugelkäfige, welche die Kugeln einer einzigen Kugellaufbahn bzw. Abwälzfläche halten, und Brückenkugelkäfige, bei denen die Kugelkäfige für mehrere Kugellaufbahnen bzw. Abwälzflächen über ein als Brücke bezeichnetes Verbindungselement miteinander verbunden sind. Erfindungsgemäß bevorzugt ist der Streifenkugelkäfig.

In der Regel und erfindungsgemäß bevorzugt wird das C-förmige Profil des Schlittens einstückig ausgebildet sein. Die Erfindung umfasst jedoch auch solche Varianten, bei denen das C-förmige Profil aus mehreren Einzelelementen zusammengesetzt ist. Dies können beispielsweise zwei einander gegenüberliegende U-förmige Profilteile sein, welche Laufflächen für das Abwälzen der Kugeln umfassen und die Endabschnitte des C-förmigen Profils bilden, und ein plattenförmiges Teil, welches sich zwischen den beiden U-förmigen Profilteilen erstreckt und diese und im wesentlichen wie die erfindungsgemäße Platte, welche dann auf der gegenüberliegenden Seite des plattenförmigen Teils angeordnet wäre, miteinander verbindet.

Die Gesamtlänge des Linearführungssystems wird im wesentlichen durch die Länge der Führungsschiene vorgegeben. Der an der Führungsschiene verfahrbar geführte Schlitten ist erheblich kürzer als die Führungsschiene. Der maximale Verfahrweg wird durch die Gesamtlänge der Führungsschiene und das Verhältnis der Länge des Schlittens zu der Länge der Führungsschiene bestimmt. Bei gegebener Länge der Führungsschiene ist der maximal mögliche Verfahrweg für einen an dem Schlitten befestigten Gegenstand umso länger je kürzer der Schlitten ist. Die Auswahl der Länge des an der Führungsschiene verfahrbar geführten Schlittens bestimmt sich jedoch nicht nur nach dem gewünschten Verfahrweg, sondern auch nach der erforderlichen Belastbarkeit und Stabilität des Linearführungssystems. Je länger der Schlitten ist, desto höher sind Belastbarkeit, Laufstabilität und Laufruhe, da bei gleich ausgestaltetem Kugellager ein längerer Schlitten gleichzeitig an mehr Kugeln abgerollt wird als ein kürzerer Schlitten.

Bei dem erfindungsgemäßen Linearführungssystem weist der Schlitten eine Platte auf, die sich zwischen den Endabschnitten des im wesentlichen C-förmigen Profils des Schlittens erstreckt und mit den Endabschnitten unlösbar oder lösbar, vorzugsweise unlösbar verbunden ist. In einer bevorzugten Ausführungsform ist die Platte mit den Endabschnitten des C-förmigen Profils mittels einer Schweißverbindung verbunden. Das C-förmige Profil und die zwischen dessen Endabschnitten befestigte Platte bilden im Querschnitt ein geschlossenes Hohlprofil wie ein rohrförmig geschlossenes Profil aus.

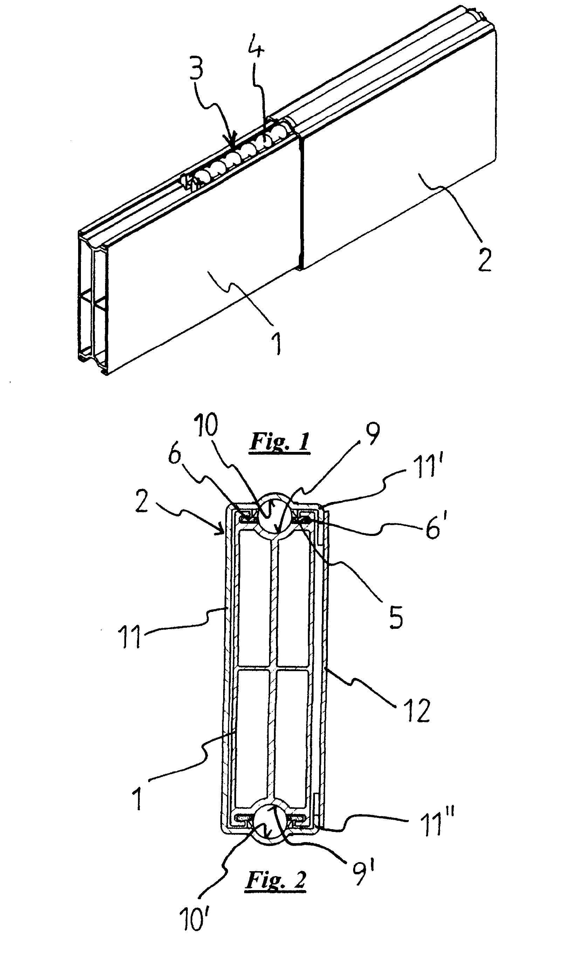

In einer Ausführungsvariante des erfindungsgemäßen Linearführungssystems umgreift der als Hohlprofil aus dem C-förmigen Proifil und der Platte gebildete Schlitten die Führungsschiene. Diese Ausführungsvariante ist beispielsweise in den anhängenden Figuren 1 und 2 dargestellt.

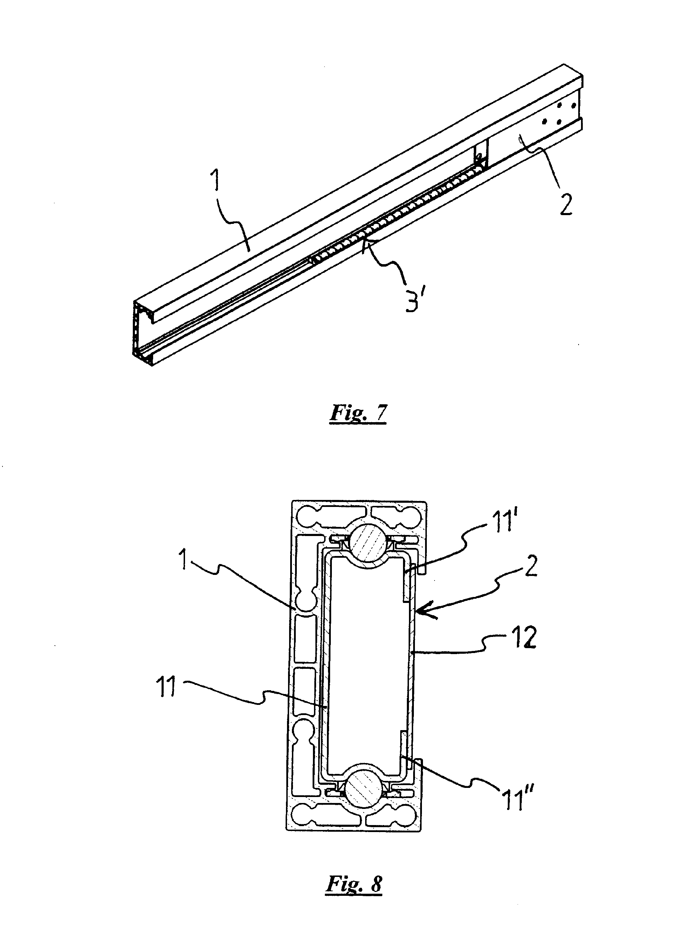

In einer alternativen Ausführungsvariante des erfindungsgemäßen Linearführungssystems weist die Führungsschiene ein im Querschnitt im wesentlichen C-förmiges Profil auf, an dessen jeweiligen Endabschnitten die Laufflächen ausgebildet sind und welches den als Hohlprofil aus dem C-förmigen Proifil und der Platte gebildete Schlitten umgreift. Diese Ausführungsvariante ist beispielsweise in den anhängenden Figuren 7, 8, 9 und 10 dargestellt.

Durch das Schließen des C-förmigen Profils des Schlittens zu einem Hohlprofil oder rohrförmigen Profil mittels der mit den Endabschnitten des C-förmigen Profils verbundenen Platte wird ein sehr hoher Lastwert und eine außerordentlich gute Verwindungsstabilität und eine gute Überlastsicherheit des Linearführungssystems erzielt.

Die Verwendung einer Platte für die Verbindung der jeweiligen Endabschnitte des C-förmigen Profils des Schlittens hat den weiteren Vorteil, daß bei der Herstellung des Linearführungssystems auftretende Toleranzen der Einzelteile beim Verbinden der Platte mit den Endabschnitten des C-förmigen Profils ausgeglichen werden können. Beim Verbinden der Platte mit den Endabschnitten des C-förmigen Profils kann das C-förmige Profil zum Ausgleich von Toleranzen mehr oder weniger stark zusammengedrückt werden und verbleibt nach dem Verbinden der Platte mit den Endabschnitten in dieser Lage. Hierdurch können nicht nur Toleranzen bei der Herstellung des C-förmigen Profils des Schlittens, sondern auch Toleranzen bei der Herstellung der Führungsschiene ausgeglichen werden.

In einer bevorzugten Ausführungsform des erfindungsgemäßen Linearführungssystems ist die Platte für die Verbindung der jeweiligen Endabschnitte des C-förmigen Profils des Schlittens eine Lochplatte mit Durchgangsöffnungen für die Montage von Befestigungsmitteln. Ein solche Lochplatte hat ein geringeres Gewicht als eine durchgängige Platte und bietet vielfältige Befestigungs- und Montagemöglichkeiten.

In einer weiteren Ausführungsform des erfindungsgemäßen Linearführungssystems weist der Kugelkäfig mehrere in Reihe hintereinander angeordnete, im wesentlichen kreisförmige Durchgangsöffnungen auf, in welche die Kugeln eingesetzt sind, wobei der Innendurchmesser der Durchgangsöffnungen in der Richtung von einer Lauffläche der Führungsschiene hin zu der zugehörigen Lauffläche des Schlittens konisch auf einen Innendurchmesser verjüngt oder durch Begrenzungsmittel auf einen Innendurchmesser eingeengt ist, der kleiner ist als der Durchmesser der Kugeln, so daß die Kugeln in den Durchgangsöffnungen gegen ein Herausfallen aus den Durchgangsöffnungen in der Richtung der Lauffläche des Schlittens gesichert sind.

Bei dieser Ausführungsform des streifenförmigen Kugelkäfigs des erfindungsgemäßen Linearführungssystems sitzen die Kugeln in den Durchgangsöffnungen und sind gegen ein Herausfallen nach oben, d. h. in der Richtung von einer Lauffläche der Führungsschiene hin zu der zugehörigen Lauffläche des Schlittens, gesichert, indem entweder der Innendurchmesser der Durchgangsöffnungen konisch auf einen Innendurchmesser verjüngt ist, der kleiner ist als der Durchmesser der Kugeln, oder indem er durch Begrenzungsmittel auf einen Innendurchmesser eingeengt ist, der kleiner ist als der Durchmesser der Kugeln.

In einer weiteren Ausführungsform des erfindungsgemäßen Linearführungssystems ist der Kugelkäfig elastisch verformbar ausgebildet und an der Führungsschiene befestigt.

In einer weiteren Ausführungsform des erfindungsgemäßen Linearführungssystems werden die Kugeln von dem Kugelkäfig mit einer Vorspannung gegen die Laufflächen der Führungsschiene gehalten werden. Dies gewährleistet, daß die Kugeln stets an den Laufflächen der Führungsschiene anliegen, wodurch ein Klappern und störende Geräuschentwicklung des Kugellagers, z.B. bei Vibrationen, vermieden werden, und zwar auch bei den Kugeln, die gerade nicht unter Belastung zwischen der Laufschiene und dem Schlitten stehen. Um die Vorspannung zu gewährleisten, ist der Kugelkäfig elastisch verformbar bzw. flexibel ausgebildet.

In einer weiteren Ausführungsform sind an den Durchgangsöffnungen des Kugelkäfigs elastisch verformbare Haltemittel vorgesehen, welche so ausgebildet sind, daß sie die Kugeln gegen ein Herausfallen aus den Durchgangsöffnungen in Richtung der unter dem Kugelkäfig angeordneten Lauffläche der Führungsschiene sichern, wenn die Kugeln nicht an der Lauffläche anliegen. Da die Kugeln von dem Kugelkäfig und den oberen Haltemitteln mit einer Vorspannung gegen die Laufflächen der Führungsschiene gehalten werden, kommt diese Sicherung nur zum Tragen, wenn die Kugeln nicht an der Lauffläche anliegen, z. B. bei der Montage und Lagerung des Kugelkäfigs.

Bevorzugt sind die elastisch verformbaren Haltemittel in Richtung der unter dem Kugelkäfig angeordneten Lauffläche als elastisch zur Mitte der Durchgangsöffnungen hin vorgespannte Stege ausgebildet. Da diese Haltemittel nur benötigt werden, wenn die Kugeln nicht an der Lauffläche anliegen, genügt es, wenn ein oder zwei solcher Stege an jeder Durchgangsöffnung vorgesehen ist, um die Kugel in der Durchgangsöffnung gegen ein Herausfallen zu sichern. Selbstverständlich können auch mehrere solcher Stege vorgesehen sein. Bei der Montage des Kugelkäfigs, nämlich beim Einsetzen der Kugeln in die Durchgangsöffnungen des Kugelkäfigs, werden die Kugeln von unten in den Kugelkäfig eingesetzt, wobei die Haltemittel bzw. Stege kurzzeitig auseinandergedrückt werden, damit eine Kugel eingesetzt werden kann.

Der streifenförmige Kugelkäfig ist einfach und preiswert herzustellen und an der Führungsschiene zu montieren und bietet gute Laufeigenschaften für das Linearführungssystem. Die Länge des Kugelkäfigs und die Anzahl der darin angeordneten Kugeln und Durchgangsöffnungen hängt wesentlich von der Gesamtlänge des Führungssystems und des Verfahrwegs ab, jedoch auch von der geforderten Belastbarkeit des Linearführungssystems, der gewünschten Haptik und Laufruhe.

In einer bevorzugten Ausführungsform des erfindungsgemäßen Linearführungssystems greifen die Seitenkanten in der Längserstreckung des streifenförmigen Kugelkäfigs in zwei sich in der Längserstreckung der Führungsschiene einander gegenüberliegenden Nuten für die Befestigung des Kugelkäfigs an der Führungsschiene ein. Für diesen Zweck sind neben den Laufflächen der Führungsschiene zwei mit ihren Öffnungen einander zugewandte Nuten vorgesehen. In diese Nuten werden die Seitenkanten des streifenförmigen Kugelkäfigs eingeführt. Dabei ist die Anordnung der Nuten so gewählt, daß der Kugelkäfig bei der Befestigung quer zu seiner Längsachse leicht verbogen wird und aufgrund seiner Flexibilität bzw. Elastizität die Kugeln stets mit einer Vorspannung gegen die Lauffläche der Führungsschiene drückt. Zweckmäßigerweise ist der streifenförmige Kugelkäfig daher aus einem flexiblen, elastischen Material, vorzugsweise Kunststoff, hergestellt. Er kann jedoch auch aus Metall, beispielsweise Stahl oder Edelstahl hergestellt sein.

In einer ganz besonders bevorzugten Ausführungsform des erfindungsgemäßen Linearführungssystems weist die Führungsschiene auf zwei einander gegenüberliegenden Seiten jeweils eine Lauffläche und ein Kugellager auf. Alternativ können an der Führungsschiene jedoch auch mehr als zwei Laufflächen und zwei Kugellager vorgesehen sein, beispielsweise zwei Laufflächen und zwei Kugellager auf jeder Seite der Führungsschiene. Für die meisten Anwendungen ist es jedoch ausreichend, wenn auf jeder der gegenüberliegenden Seiten der Führungsschiene jeweils genau eine Lauffläche und ein Kugellager vorgesehen sind.

In einer weiteren bevorzugten Ausführungsform des erfindungsgemäßen Linearführungssystems weist der streifenförmige Kugelkäfig in seiner Längserstreckung wenigstens abschnittsweise, vorzugsweise über seine gesamte Länge, wenigstens eine Torsionsnut (nutenförmige Ausnehmung) auf. Vorzugsweise ist die wenigstens eine Torsionsnut auf der den Laufflächen der Führungsschiene zugewandten Seite des Kugelkäfigs angeordnet. Diese wenigstens eine Torsionsnut beeinflußt bzw. verändert die elastische Biegsamkeit des streifenförmigen Kugelkäfigs quer zu seiner Längsachse. Durch die Breite und Tiefe der wenigstens einen Torsionsnut kann die Vorspannkraft der Kugeln gegen die Laufflächen der Führungsschiene variiert bzw. eingestellt werden. Ein weiterer Vorteil der wenigstens einen Torsionsnut besteht darin, daß sie als Vorratsraum für einen bei Kugellagern üblicherweise verwendeten Schmierstoff dienen kann.

In einer weiteren bevorzugten Ausführungsform des erfindungsgemäßen Linearführungssystems weist der streifenförmige Kugelkäfig auf der den Laufflächen der Führungsschiene abgewandten Seite mehrere in der Nähe der Seitenkanten in der Längsrichtung des Kugelkäfigs und in Reihe hintereinander angeordnete noppenförmige Erhebungen auf. Diese noppenförmigen Erhebungen haben mehrere Vorteile. Durch das Abrollen der Kugeln auf der Lauffläche der Führungsschiene beim Verfahren des Schlittens wird der gesamte Kugelkäfig in Längsrichtung der Führungsschiene ebenfalls mitverfahren bzw. -verschoben. Die noppenförmigen Erhebungen in der Nähe der Seitenkanten des streifenförmigen Kugelkäfigs verringern die Anlagefläche der Bereiche der Seitenkanten innerhalb der an der Führungsschiene zum Halten des Kugelkäfigs vorgesehenen Nuten und damit den Reibungswiderstand. Darüber hinaus sorgen die noppenförmigen Erhebungen für eine gute Verteilung von Schmierstoff, der zweckmäßigerweise in den Nuten an der Führungsschiene zum leichteren Verschieben des Kugelkäfigs vorgesehen ist.

In einer weiteren bevorzugten Ausführungsform weit der streifenförmige Kugelkäfig an seinen beiden Endabschnitten Endanschläge auf, die so ausgebildet sind, daß der Schlitten nicht über ein Ende des Kugelkäfigs hinweg verfahren werden kann, sondern bei Erreichen eines Endes des Kugelkäfigs auf den Endanschlag trifft. Tritt dies ein und ist beim Verfahren des Schlittens noch nicht das Ende der Führungsschiene erreicht, so nimmt bzw. zieht der Schlitten den Kugelkäfig mit bis zum Ende des Verfahrweges. Durch die Endanschläge an den jeweiligen Enden des Kugelkäfigs wird gewährleistet, daß der Schlitten stets mit seiner vollen Länge über dem Kugelkäfig verbleibt und nicht über diesen hinaus verfahren wird. Dies verbessert Stabilität, Laufeigenschaften und Belastbarkeit des erfindungsgemäßen Führungssystems.

Weitere Vorteile, Merkmale und Ausgestaltungsformen des erfindungsgemäßen Linearführungssystems werden deutlich anhand der nachfolgenden Beschreibung einer bevorzugten Ausführungsform und der dazugehörigen Figuren.
- Figur 1: zeigt ein erfindungsgemäßes Linearführungssystem, bei welchem der Schlitten die Führungsschiene umgreift, in perspektivischer Ansicht schräg von oben.
- Figur 2: zeigt das erfindungsgemäße Linearführungssystem aus Figur 1 im Querschnitt zu seiner Längserstreckung.
- Figur 3: zeigt einen streifenförmigen Kugelkäfig des erfindungsgemäßen Linearführungssystems von unten, von der Seite und von oben.
- Figur 4: zeigt einen Querschnitt durch den streifenförmigen Kugelkäfig gemäß Figur 3 entlang der Schnittlinie C-C.
- Figur 5: zeigt einen Querschnitt durch den streifenförmigen Kugelkäfig gemäß Figur 3 entlang der Schnittlinie D-D.
- Figur 6: zeigt einen Schnitt durch den streifenförmigen Kugelkäfig gemäß Figur 3 entlang der Schnittlinie F-F.
- Figur 7: zeigt eine weitere Ausführungsform eines erfindungsgemäßen Linearführungssystems, bei welchem die Führungsschiene den Schlitten umgreift, in perspektivischer Ansicht schräg von oben.
- Figur 8: zeigt das erfindungsgemäße Linearführungssystem aus Figur 7 im Querschnitt zu seiner Längserstreckung.
- Figur 9: zeigt eine weitere Ausführungsform eines erfindungsgemäßen Linearführungssystems, bei welchem die Führungsschiene den Schlitten umgreift, in perspektivischer Ansicht schräg von oben.
- Figur 10: zeigt das erfindungsgemäße Linearführungssystem aus Figur 9 im Querschnitt zu seiner Längserstreckung.

In den verschiedenen Figuren werden Teile, die einander entsprechende Funktionen haben, mit gleichen Bezugszahlen bezeichnet, auch wenn sie in Ihrer konkreten Ausgestaltung voneinander abweichen können.

Figur 1 ist eine perspektivische Ansicht schräg von oben auf eine besonders bevorzugte Ausführungsform des erfindungsgemäßen Linearführungssystems mit einer Führungsschiene 1, einem Schlitten 2 und zwei Kugellagern 3 und 3'. Wie in Figur 2 gezeigt ist, ist die Führungsschiene 1 bei dieser erfindungsgemäß besonders bevorzugten Ausführungsform als ein durch Extrusion hergestelltes Profil, vorzugsweise aus Aluminium, hergestellt. Die Führungsschiene 1 hat ein im wesentlichen kastenförmiges Profil, welches im Inneren Hohlräume und Stabilisierungsverstrebungen aufweist. Auf zwei gegenüberliegenden Seiten der Führungsschiene sind Laufflächen 9 und 9' angeordnet. Seitlich der Laufflächen erstreckt sich das Profil weiter unter Ausbildung von einander zugewandten Nuten 6 und 6 ', in welche die Seitenkanten des Kugelkäfigs 5 eingreifen. Der Kugelkäfig 5 ist mit Kugeln 4 bestückt, die nach oben gegen ein Herausfallen dadurch gesichert sind, daß sich der Innendurchmesser der Durchgangsöffnungen konisch verjüngt. Der Kugelkäfig 5 hält die Kugeln 4 mit einer Vorspannung gegen die Laufflächen 9 bzw. 9' der Führungsschiene 1 gedrückt.

Des weiteren ist in Figur 2 deutlich zu erkennen, daß der Schlitten 2 aus einem im wesentlichen C-förmigen Profil 11 und einer mit den Endabschnitten 11' und 11" des C-förmigen Profils 11 verbundenen Platte 12 besteht. Das C-förmige Profil 11 und die damit verbundene Platte 12 bilden ein geschlossenes Hohlprofil aus. Die Platte 12 ist mit den Endabschnitten 11' und 11" des C-förmigen Profils 11 verschweißt.

Bei der Platte 12 in Figur 1 kann es sich um eine Lochplatte handeln (nicht dargestellt). Die Lochplatte 12 kann zur Befestigung eines zu verfahrenen Gegenstandes verwendet werden, wenn die Führungsschiene stationär montiert wird. Alternativ kann der Schlitten 2 über die Lochplatte 12 stationär und die Führungsschiene 1 an einem zu verfahrenden Gegenstand, wie beispielsweise einer Fahrzeugschiebetür, befestigt werden. Die Befestigung der Führungsschiene erfolgt üblicherweise über Anschlußstücke, die an den jeweiligen Enden der Führungsschiene befestigt werden (nicht dargestellt).

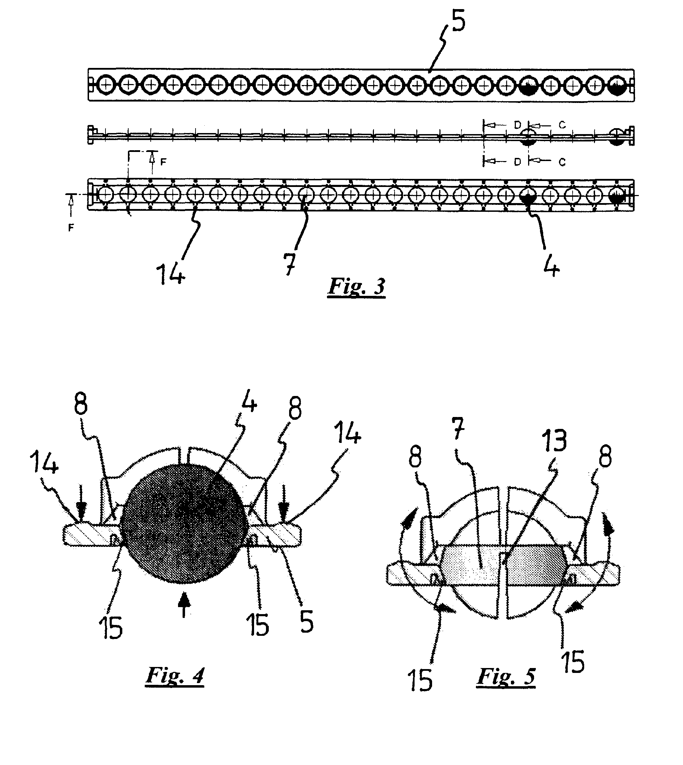

Figur 3 zeigt den erfindungsgemäß geeigneten streifenförmigen Kugelkäfig 5 mit in dieser Darstellung nur zwei in den Durchgangsöffnungen 7 angeordneten Kugeln 4. Es versteht sich von selbst, daß in einem vollständig montierten Linearführungssystem in jeder oder wenigstens den meisten der Durchgangsöffnungen 7 eine Kugel 4 vorgesehen ist.

Figur 4 zeigt eine vergrößerte Querschnittsdarstellung des Kugelkäfigs 5 gemäß Figur 3 entlang der Schnittlinie C-C. Hierin sind deutlich die konische Verjüngung des Innendurchmessers der Durchgangsöffnung 7 und die als elastische Stege ausgebildeten Haltemittel 15 zu erkennen. Die konisch verjüngte Wandfläche 8 der Durchgangsöffnung liegt oberhalb der Mittelebene der Kugel an dieser an und die Haltemittel 15 liegen unterhalb der Mittelebene der Kugel an dieser an und sichern die Kugel somit gegen ein Herausfallen aus der Durchgangsöffnung 7.

In Figur 4 ist auch deutlich zu erkennen, daß auf dem Kugelkäfig 5 in der Nähe der Seitenkanten noppenförmigen Erhebungen 14 angeordnet sind. Figur 3, untere Darstellung, zeigt, daß die noppenförmigen Erhebungen 14 in Reihen hintereinander und in gleichmäßigen Abständen auf der Oberseite des Kugelkäfigs 5 angeordnet sind. Die noppenförmigen Erhebungen 14 verringern die Anlagefläche des Kugelkäfigs in den Nuten 6 und 6' an der Führungsschiene 1 und damit den Reibungswiderstand.

Figur 5 zeigt einen Querschnitt durch den Kugelkäfig 5 gemäß Figur 3 entlang der Schnittlinie D-D. Figur 5 zeigt im wesentlichen die gleiche Schnittansicht wie Figur 4, jedoch ohne eine in die geschnittene Durchgangsöffnung 7 eingesetzte Kugel.

Wie in Figur 5 gezeigt ist, weist der Kugelkäfig 5 auf der Unterseite eine Torsionsnut 13 (nutenförmige Ausnehmung) auf, die sich im Wesentlichen über die gesamte Länge des Kugelkäfigs erstreckt und durch welche die Biegsamkeit und Elastizität des Kugelkäfigs quer zu seiner Längserstreckung beeinflußt wird. Durch die Auswahl der Breite und Tiefe der Torsionsnut 13 kann somit die Vorspannung (Vorspannkraft) der Kugeln gegen die Laufflächen 9 und 9' der Führungsschiene 1 variiert bzw. eingestellt werden. In der vorliegenden Beschreibung wird von einer Torsionsnut gesprochen, obwohl diese durch die Durchgangsöffnungen des Kugelkäfigs verläuft und in den Durchgangsöffnungen eigentlich keine Nut mehr darstellt. Man könnte gleichermaßen auch von vielen einzelnen (kleinen) Torsionsnuten sprechen, die sich in den Bereichen zwischen benachbarten Durchgangsöffnungen in der Längsrichtung des Kugelkäfigs erstrecken.

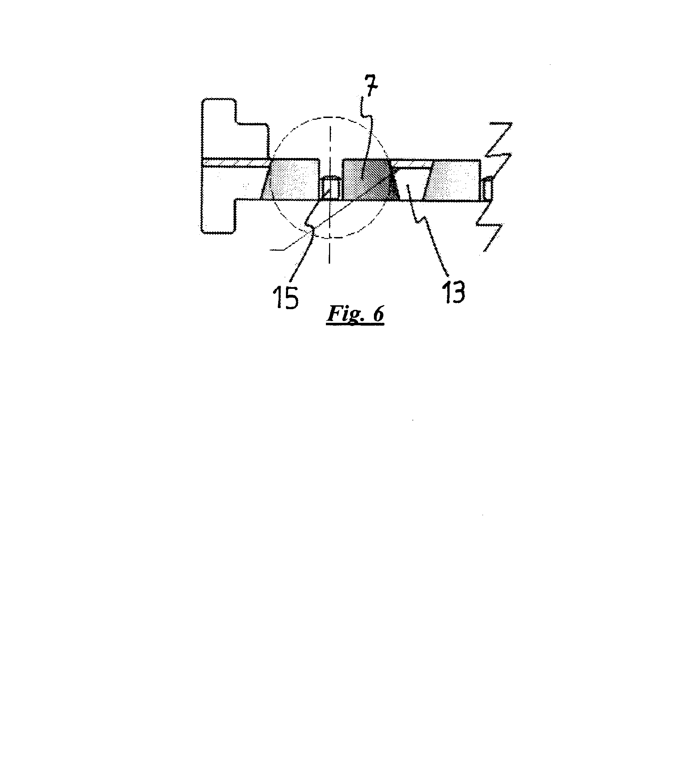

Figur 6 zeigt einen Schnitt durch den streifenförmigen Kugelkäfig gemäß Figur 3 entlang der Schnittlinie F-F. Deutlich zu erkennen sind in den Figuren 3 bis 6 auch die den Endabschnitten des streifenförmigen Kugelkäfigs nach oben stehenden Endanschläge, die so ausgebildet sind, daß der Schlitten nicht über ein Ende des Kugelkäfigs hinweg verfahren werden kann.

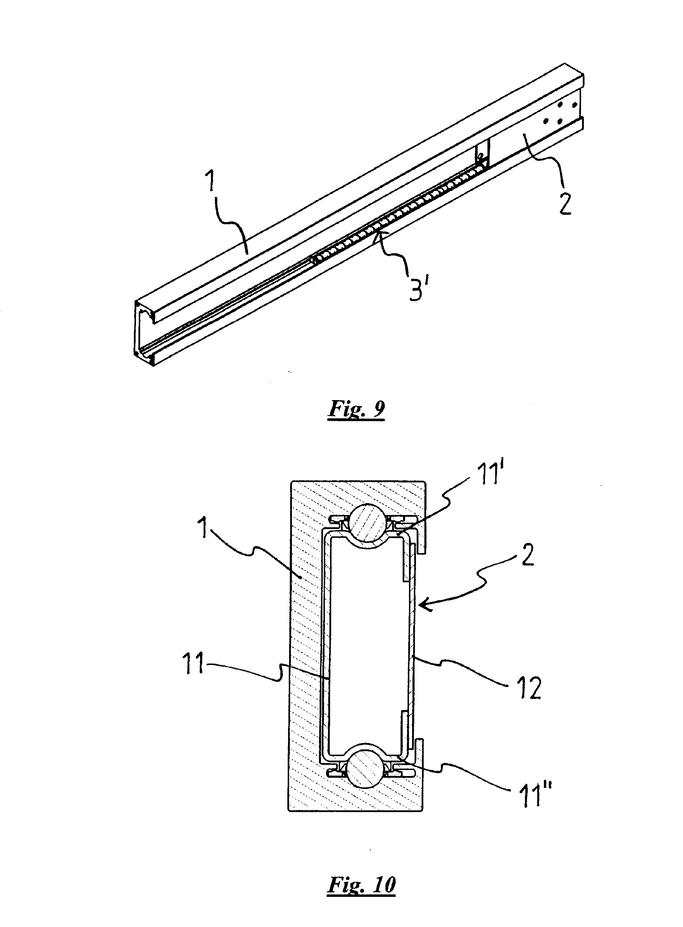

Die Figuren 7 bis 10 zeigen alternative Ausführungsformen erfindungsgemäßer Linearführungssysteme, bei denen die Führungsschiene 1 den als geschlossenes Hohlprofil ausgebildeten Schlitten 2 umgreift. Auch hier besteht der Schlitten 2 aus einem im Wesentlichen C-förmigen Profil 11, dessen Endabschnitte über eine sich zwischen den Endabschnitten 11', 11" erstreckende Platte 12 miteinander verbunden sind. Die Führungsschiene 1 ist im Querschnitt im Wesentlichen C-förmig ausgebildet und umgreift den als geschlossenes Hohlprofil ausgebildeten Schlitten 2, so daß dieser Schlitten 2 im Inneren der Führungsschiene 1 geführt wird. Bei der Ausführungsvariante gemäß den Figuren 7 und 8 ist die Führungsschiene 1 als ein durch Extrusion hergestelltes Profil mit inneren Hohlräumen und Stabilisierungsverstrebungen ausgebildet, wogegen die Führungsschiene 1 in den Figuren 9 und 10 als Vollmaterial ausgebildet ist. In den Figuren 7 und 9 erkennt man, dass die Platte 12 Montagebohrungen zur Befestigung an einem Korpus oder eines für das Verfahren vorgesehenen Gegenstandes aufweist.

### Bezugszeichen

- 1: Führungsschiene
- 2: Schlitten
- 3, 3': Kugellager
- 4: Kugeln
- 5: Kugelkäfig
- 6, 6': Nuten
- 7: Durchgangsöffnungen
- 8: verjüngte Wände der Durchgangsöffnungen
- 9, 9': Laufflächen der Führungsschiene 1
- 10, 10': Laufflächen des C-förmigen Profils 11
- 11: C-förmiges Profil
- 11', 11": Endabschnitte des C-förmigen Profils 11
- 12: Platte
- 13: Torsionsnut
- 14: noppenförmige Erhebungen
- 15: Haltemittel

## Patentansprüche

1. Linearführungssystem mit einer Führungsschiene (1) und einem daran über wenigstens zwei Kugellager (3, 3') verfahrbar geführten Schlitten (2), wobei die Kugellager jeweils mehrere Kugeln (4) und einen Kugelkäfig (5) umfassen und die Führungsschiene (1) Laufflächen (9, 9') und der Schlitten (2) Laufflächen (10, 10') für das Abwälzen der Kugeln (4) der Kugellager (3, 3') aufweisen, wobei der Schlitten (2) ein im Querschnitt im wesentlichen C-förmiges Profil (11) umfaßt, wobei an den jeweiligen Endabschnitten (11', 11") des C-förmigen Profils (11) die Laufflächen (10, 10') ausgebildet sind, und der Schlitten (2) weiterhin eine Platte (12) umfaßt, die sich unter Ausbildung eines geschlossenen Hohlprofils zwischen den Endabschnitten (11', 11") des C-förmigen Profils (11) des Schlittens (2) erstreckt und mit diesen Endabschnitten (11', 11") unlösbar oder lösbar verbunden ist, **dadurch gekennzeichnet, daß** der Kugelkäfig (5) elastisch verformbar ausgebildet und an der Führungsschiene (1) befestigt ist.

2. Linearführungssystem nach Anspruch 1, **dadurch gekennzeichnet, daß** die Platte (12) mit den Endabschnitten (11', 11") des im wesentlichen C-förmigen Profils (11) des Schlittens (2) unlösbar, besonders bevorzugt mittels einer Schweißverbindung, verbunden ist.

3. Linearführungssystem nach einem der Ansprüche 1 oder 2, **dadurch gekennzeichnet, daß** der Schlitten (2) die Führungsschiene (1) im Querschnitt geschlossen umgreift.

4. Linearführungssystem nach einem der Ansprüche 1 oder 2, **dadurch gekennzeichnet, daß** die Führungsschiene (1) ein im Querschnitt im wesentlichen C-förmiges Profil aufweist, an dessen jeweiligen Endabschnitten die Laufflächen (9, 9') ausgebildet sind und welches den Schlitten (2) umgreift.

5. Linearführungssystem nach einem der vorangegangenen Ansprüche, **dadurch gekennzeichnet, daß** die Platte (12) eine Lochplatte mit Durchgangsöffnungen für die Montage von Befestigungsmitteln ist.

6. Linearführungssystem nach einem der vorangegangenen Ansprüche, **dadurch gekennzeichnet, daß** der Kugelkäfig (5) mehrere in Reihe hintereinander angeordnete, im wesentlichen kreisförmige Durchgangsöffnungen (7) aufweist, in welche die Kugeln (4) eingesetzt sind, wobei der Innendurchmesser der Durchgangsöffnungen in der Richtung von einer Lauffläche (9, 9') der Führungsschiene hin zu der zugehörigen Lauffläche (10, 10') des Schlittens (2) konisch auf einen Innendurchmesser verjüngt oder durch Begrenzungsmittel auf einen Innendurchmesser eingeengt ist, der kleiner ist als der Durchmesser der Kugeln, so daß die Kugeln in den Durchgangsöffnungen (7) gegen ein Herausfallen aus den Durchgangsöffnungen (7) in der Richtung der Lauffläche (10, 10') des Schlittens gesichert sind.

7. Linearführungssystem nach einem der vorangegangenen Ansprüche, **dadurch gekennzeichnet, daß** die Kugeln (4) von dem Kugelkäfig (5) mit einer Vorspannung gegen die Laufflächen (9, 9') der Führungsschiene gehalten werden.

8. Linearführungssystem nach einem der vorangegangenen Ansprüche, **dadurch gekennzeichnet, daß** an dem Kugelkäfig (5) in seiner Längserstreckung wenigstens abschnittsweise, vorzugsweise über seine gesamte Länge, wenigstens eine Torsionsnut (13) (nutenförmige Ausnehmung) vorgesehen ist, welche vorzugsweise auf der den Laufflächen (9, 9') der Führungsschiene (1) zugewandten Seite des Kugelkäfigs (5) angeordnet ist.

9. Linearführungssystem nach einem der vorangegangenen Ansprüche, **dadurch gekennzeichnet, daß** an den Durchgangsöffnungen (7) des Kugelkäfigs (5) elastisch verformbare Haltemittel (15) vorgesehen sind, welche so ausgebildet sind, daß sie die Kugeln gegen ein Herausfallen aus den Durchgangsöffnungen (7) in Richtung der unter dem Kugelkäfig (5) angeordneten Lauffläche (9, 9') der Führungsschiene sichern, wenn die Kugeln (4) nicht an der Lauffläche (9, 9') anliegen.

10. Linearführungssystem nach einem der vorangegangenen Ansprüche, **dadurch gekennzeichnet, daß** die Seitenkanten (5', 5") in der Längserstreckung des Kugelkäfigs (5) in zwei sich in der Längserstreckung der Führungsschiene (1) einander gegenüberliegende Nuten (6, 6') für die Befestigung des Kugelkäfigs (5) an der Führungsschiene eingreifen.

11. Linearführungssystem nach einem der vorangegangenen Ansprüche, **dadurch gekennzeichnet, daß** der Kugelkäfig (5) aus Kunststoff, hergestellt ist.

12. Linearführungssystem nach einem der vorangegangenen Ansprüche, **dadurch gekennzeichnet, daß** die Führungsschiene (1) auf zwei einander gegenüberliegenden Seiten jeweils genau eine Lauffläche (9, 9') und ein Kugellager aufweist.

13. Linearführungssystem nach einem der vorangegangenen Ansprüche, **dadurch gekennzeichnet, daß** der Kugelkäfig (5) auf der den Laufflächen (9, 9') der Führungsschiene (1) abgewandten Seite mehrere in der Nähe der Seitenkanten in der Längserstreckung des Kugelkäfigs (5) und in Reihe hintereinander angeordnete noppenförmige Erhebungen (14) aufweist.

## Claims

1. A linear guidance system comprising a guide rail (1) and a carriage (2) which is guided displaceably on the guide rail by way of at least two ball bearings (3, 3'), wherein the ball bearings respectively comprise a plurality of balls (4) and a ball cage (5) and the guide rail (1) has running surfaces (9, 9') and the carriage (2) has running surfaces (10, 10') for the rolling movement of the balls (4) of the ball bearings (3, 3'), wherein the carriage (2) includes a profile member (11) which is substantially C-shaped in cross-section, wherein the running surfaces (10, 10') are provided at the respective end portions (11', 11") of the C-shaped profile member (11) and the carriage (2) further includes a plate (12) which extends between the end portions (11', 11 ") of the C-shaped profile member (11) of the carriage (2) and is non-releasably or releasably connected to said end portions (11', 11"), forming a closed hollow profile, **characterised in that** the ball cage (5) is elastically deformable and is fixed to the guide rail (1).

2. A linear guidance system as set forth in claim 1 **characterised in that** the plate (12) is connected non-releasably to the end portions (11', 11 ") of the substantially C-shaped profile member (11) of the carriage (2), particularly preferably by means of a welded connection.

3. A linear guidance system as set forth in one of claims 1 and 2 **characterised in that** the carriage (2) embraces the guide rail (1) closed in cross-section.

4. A linear guidance system as set forth in one of claims 1 and 2 **characterised in that** the guide rail (1) has a profile member which is substantially C-shaped in cross-section and at the respective end portions of which the running surfaces (9, 9') are provided and which embraces the carriage (2).

5. A linear guidance system as set forth in one of the preceding claims **characterised in that** the plate (12) is an apertured plate with through openings for mounting securing means.

6. A linear guidance system as set forth in one of the preceding claims **characterised in that** the ball cage (5) has a plurality of substantially circular through openings (7) which are arranged in succession in a row and into which the balls (4) are inserted, wherein the inside diameter of the through openings tapers conically in the direction from a running surface (9, 9') of the guide rail to the associated running surface (10, 10') of the carriage (2) to an inside diameter or is constricted by limiting means to an inside diameter which is smaller than the diameter of the balls so that the balls are secured in the through openings (7) to prevent them from falling out of the through openings (7) in the direction of the running surface (10, 10') of the carriage.

7. A linear guidance system as set forth in one of the preceding claims **characterised in that** the balls (4) are held by the ball cage (5) with a prestressing against the running surfaces (9, 9') of the guide rail.

8. A linear guidance system as set forth in one of the preceding claims **characterised in that** provided on the ball cage (5) in its longitudinal extent at least portion-wise and preferably over its entire length is at least one torsion groove (13) (groove-shaped opening) which is preferably arranged on the side of the ball cage (5), that is towards the running surfaces (9, 9') of the guide rail (1).

9. A linear guidance system as set forth in one of the preceding claims **characterised in that** provided at the through openings (7) of the ball cage (5) are elastically deformable holding means (15) which are of such a configuration that they secure the balls to prevent them from falling out of the through openings (7) in the direction of the running surface (9, 9'), arranged under the ball cage (5), of the guide rail, when the balls (4) do not bear against the running surface (9, 9').

10. A linear guidance system as set forth in one of the preceding claims **characterised in that** the side edges (5', 5") in the longitudinal extent of the ball cage (5) engage into two grooves (6, 6') disposed in mutually opposite relationship in the longitudinal extent of the guide rail (1) for securing the ball cage (5) to the guide rail.

11. A linear guidance system as set forth in one of the preceding claims **characterised in that** the ball cage (5) is made from plastic material.

12. A linear guidance system as set forth in one of the preceding claims **characterised in that** the guide rail (1) on two mutually opposite sides has respectively precisely one running surface (9, 9') and one ball bearing.

13. A linear guidance system as set forth in one of the preceding claims **characterised in that** the ball cage (5), on the side remote from the running surfaces (9, 9') of the guide rail (1), has a plurality of knob-shaped raised portions (14) arranged in succession in a row and in the proximity of the side edges in the longitudinal extent of the ball cage (5).

## Revendications

1. Système de guidage linéaire avec un rail de guidage (1) et un chariot (2) guidé de façon mobile sur le rail par le biais d'au moins deux roulements à billes (3, 3'), les roulements à billes comprenant respectivement plusieurs billes (4) et une cage à billes (5), et le rail de guidage (1) présentant des surfaces de roulement (9, 9'), et le chariot (2) présentant des surfaces de roulement (10, 10') pour le roulement des billes (4) des roulements à billes (3, 3'), le chariot (2) comprenant un profilé (11) de section transversale essentiellement en forme de C, les surfaces de roulement (10, 10') étant constituées sur les tronçons d'extrémité (11', 11'') respectifs du profilé (11) en forme de C, et le chariot (2) comprenant en outre une plaque (12) qui s'étend, en formant un profilé creux fermé, entre les tronçons d'extrémité (11', 11'') du profilé (11) en forme de C du chariot (2) et qui est raccordée de façon inamovible ou amovible à ces tronçons d'extrémité (11', 11''), **caractérisé en ce que** la cage à billes (5) est constituée de façon élastiquement déformable et est fixée sur le rail de guidage (1).

2. Système de guidage linéaire selon la revendication 1, **caractérisé en ce que** la plaque (12) est raccordée de façon inamovible aux tronçons d'extrémité (11', 11'') du profilé (11) essentiellement en forme de C du chariot (2), de façon particulièrement préférée au moyen d'une liaison soudée.

3. Système de guidage linéaire selon l'une des revendications 1 ou 2, **caractérisé en ce que** le chariot (2) entoure le rail de guidage (1) de façon fermée en section transversale.

4. Système de guidage linéaire selon l'une des revendications 1 ou 2, **caractérisé en ce que** le rail de guidage (1) présente un profilé de section transversale essentiellement en forme de C aux tronçons d'extrémité respectifs duquel les surfaces de roulement (9, 9') sont constituées et qui entoure le chariot (2).

5. Système de guidage linéaire selon l'une des revendications précédentes, **caractérisé en ce que** la plaque (12) est une plaque perforée avec des ouvertures de passage pour le montage de moyens de fixation.

6. Système de guidage linéaire selon l'une des revendications précédentes, **caractérisé en ce que** la cage à billes (5) présente plusieurs ouvertures de passage (7) disposées en série les unes derrière les autres, essentiellement circulaires, dans lesquelles les billes (4) sont insérées, le diamètre intérieur des ouvertures de passage se rétrécissant selon un cône dirigé à partir d'une surface de roulement (9, 9') du rail de guidage vers la surface de roulement (10, 10') correspondante du chariot, ou est restreint par des moyens de limitation, à un diamètre intérieur qui est plus petit que le diamètre des billes, se de telle sorte que les billes dans les ouvertures de passage (7) sont bloquées pour les empêcher de sortir des ouvertures de passage (7) en direction de la surface de roulement (10, 10') du chariot (2).

7. Système de guidage linéaire selon l'une des revendications précédentes, **caractérisé en ce que** les billes (4) sont retenues par la cage à billes (5) avec une pré-tension contre les surfaces de roulement (9, 9') du rail de guidage.

8. Système de guidage linéaire selon l'une des revendications précédentes, **caractérisé en ce que**, sur la cage à billes (5), dans son étendue longitudinale, il est prévu au moins une rainure de torsion (13) (creux en forme de rainure) au moins par tronçons, de préférence sur toute sa longueur, qui est de préférence disposée sur le côté de la cage à billes (5) qui est tourné vers les surfaces de roulement (9, 9') du rail de guidage (1).

9. Système de guidage linéaire selon l'une des revendications précédentes, **caractérisé en ce que**, sur les ouvertures de passage (7) de la cage à billes (5), il est prévu des moyens de retenue (15) élastiquement déformables, qui sont constitués de telle sorte qu'ils bloquent les billes pour les empêcher de sortir des ouvertures de passage (7) en direction de la surface de roulement (9, 9') du rail de guidage disposée sous la cage à billes (5) quand les billes (4) ne sont pas adjacentes à la surface de roulement (9, 9').

10. Système de guidage linéaire selon l'une des revendications précédentes, **caractérisé en ce que** les arêtes latérales (5', 5''), dans l'étendue longitudinale de la cage à billes (5), engrènent dans deux rainures (6, 6') opposées dans l'étendue longitudinale du rail de guidage (1), pour la fixation de la cage à billes (5) sur le rail de guidage.

11. Système de guidage linéaire selon l'une des revendications précédentes, **caractérisé en ce que** la cage à billes (5) est fabriquée en matériau synthétique.

12. Système de guidage linéaire selon l'une des revendications précédentes, **caractérisé en ce que** le rail de guidage (1) présente, sur deux côtés opposés, respectivement précisément une surface de roulement (9, 9') et un roulement à billes.

13. Système de guidage linéaire selon l'une des revendications précédentes, **caractérisé en ce que**, sur le côté éloigné des surfaces de roulement (9, 9') du rail de guidage (1), la cage à billes (5) présente plusieurs surélévations (14) en forme de bossages disposées à proximité des arêtes latérales dans l'étendue longitudinale de la cage à billes (5) et en série les unes derrière les autres.
